# EUROPEAN PATENT APPLICATION

(11) **EP 4 358 248 A2**
(43) Date of publication of application: **24.04.2024**
(21) Application number: 23198903.9
(22) Date of filing: 21.09.2023
(51) Int. Cl.: H01M 50/209, H01M 50/227, H01M 50/238, H01M 50/244, H01M 50/249, H01M 50/264, H01M 50/289

(54) **BATTERY MODULE**

(30) Priority: 20.10.2022 JP 2022168082
(71) Applicant: Prime Planet Energy & Solutions, Inc., Chuo-ku Tokyo 103-0022 (JP)
(72) Inventor: KURIHARA, Ken, Chuo-ku, Tokyo, 103-0022 (JP); ABE, Kosyo, Chuo-ku, Tokyo, 103-0022 (JP)
(74) Representative: Kuhnen & Wacker Patent- und Rechtsanwaltsbüro PartG mbB

(57) **Abstract**

A plurality of battery cells (100) are arranged side by side in a first direction and each have a prismatic shape. A case (140) accommodates the plurality of battery cells (100), and supports the plurality of battery cells (100) in at least a first direction, and forms a unit (10) including the plurality of battery cells (100). The case (140) includes a first end portion (162) and a second end portion (152) arranged side by side and facing each other in a second direction orthogonal to the first direction. The first end portion (162) is provided with a biasing portion (163) that is deformed, when one battery cell (100) of the plurality of battery cells (100) is inserted into the case (140), to bias the battery cell (100) toward the second end portion (152) of the case (140). The second end portion (152) is provided with a reference surface (153) to position the battery cell (100) in the second direction.

## Description

### CROSS REFERENCE TO RELATED APPLICATIONS

This nonprovisional application is based on Japanese Patent Application No. 2022-168082 filed on October 20, 2022 with the Japan Patent Office, the entire contents of which are hereby incorporated by reference.

### BACKGROUND OF THE INVENTION

### Field of the Invention

The present technology relates to a battery module.

### Description of the Background Art

Japanese Patent Laying-Open No. 2017-162810 is a prior art document that discloses a configuration of a battery module. In the battery module described in Japanese Patent Laying-Open No. 2017-162810, a battery cell unit in which a battery cell and a separator are stacked is restrained by a frame while the battery cell and the separator are fixed together by a plate having a pin.

Japanese Patent Laying-Open No. 2017-37789 is a prior art document that discloses a configuration of a battery module. In the battery module described in Japanese Patent Laying-Open No. 2017-37789, a protrusion is provided in one of a battery cell and a separator, a recess is provided in the other of the battery cell and the separator, and the protrusion and the recess are fitted together, thereby preventing positional deviation between stacked battery cells.

### SUMMARY OF THE INVENTION

As a configuration of a battery module, a plurality of battery cells may be accommodated in a case to form one unit, and a plurality of such units may be arranged side by side in a stacking direction of the battery cells and may be restrained. In this case, with each of the configurations of the battery modules described in Japanese Patent Laying-Open No. 2017-162810 and Japanese Patent Laying-Open No. 2017-37789, each of the plurality of battery cells cannot be positioned with respect to the case.

The present technology has been made to solve the above-described problem and has an object to provide a battery module in which a battery cell can be positioned with respect to a case that forms a unit including a plurality of battery cells.

The present technology provides the following battery module.
[1] A battery module comprising:
   a plurality of battery cells arranged side by side in a first direction, each of the plurality of battery cells having a prismatic shape; and
   a case that accommodates the plurality of battery cells, that supports the plurality of battery cells in at least the first direction, and that forms a unit including the plurality of battery cells, wherein
   the case includes a first end portion and a second end portion arranged side by side and facing each other in a second direction orthogonal to the first direction,
   the first end portion is provided with a biasing portion that is deformed, when one battery cell of the plurality of battery cells is inserted into the case, to bias the battery cell toward the second end portion of the case, and
   the second end portion is provided with a reference surface to position the battery cell in the second direction.
[2] The battery module according to [1], wherein the biasing portion is plastically deformed when the battery cell is inserted into the case.
[3] The battery module according to [1] or [2], wherein the battery cell is inserted into the case along a third direction orthogonal to the first direction and the second direction.
[4] The battery module according to [3], wherein a tapered portion extending along the third direction is provided to be continuous to the biasing portion or the reference surface.
[5] The battery module according to any one of [1] to [4], wherein the biasing portion is a rib protruding from the first end portion toward a housing of the battery cell.
[6] The battery module according to [5], wherein the rib is formed in one piece with the case.
[7] The battery module according to [5] or [6], wherein the rib is inclined at an angle of 20° or more and 45° or less with respect to the first direction.
   The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a configuration of a battery module according to one embodiment of the present technology.
Fig. 2 is a perspective view showing an internal configuration of the battery module according to the embodiment of the present technology.
Fig. 3 is a perspective view showing a configuration of a unit included in the battery module according to the embodiment of the present technology.
Fig. 4 is a perspective view showing a configuration of a battery cell included in the battery module according to the embodiment of the present technology.
Fig. 5 is a cross sectional view showing a configuration of a case included in the battery module according to the embodiment of the present technology.
Fig. 6 is a perspective view of the case of Fig. 5 when viewed in a direction of arrow VI.
Fig. 7 is a cross sectional view showing a configuration of a biasing portion included in the battery module according to the embodiment of the present technology.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium ion battery. In the present specification, the term "electrode" may collectively represent a positive electrode and a negative electrode.

Further, the "battery module" can be mounted on vehicles such as a hybrid electric vehicle (HEV), a plug-in hybrid electric vehicle (PHEV), and a battery electric vehicle (BEV). It should be noted that the use of the "battery module" is not limited to the use in a vehicle.

It should be noted that in each of the figures, an X direction serving as a second direction is defined as a direction in which a positive electrode terminal and a negative electrode terminal of a battery cell are arranged, a Y direction serving as a first direction is defined as a direction in which a plurality of battery cells are stacked, and a Z direction serving as a third direction is defined as a height direction of the battery module.

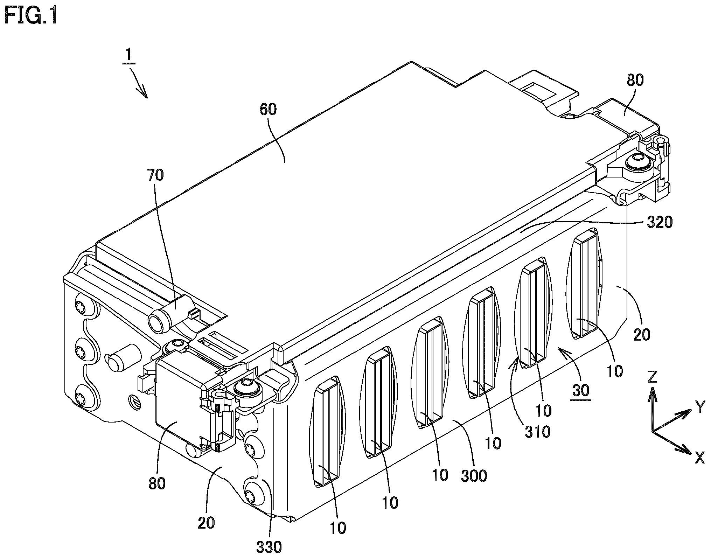

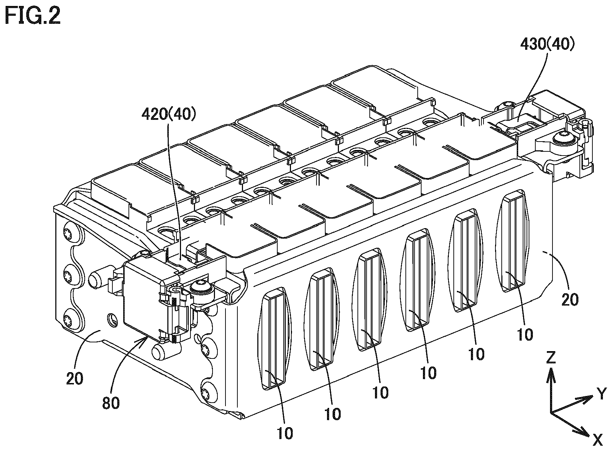

Fig. 1 is a perspective view showing a configuration of a battery module according to one embodiment of the present technology. Fig. 2 is a perspective view showing an internal configuration of the battery module according to the embodiment of the present technology.

First, an overall structure of a battery module 1 will be described. As shown in Figs. 1 and 2, battery module 1 includes a plurality of units 10, end plates 20, restraint members 30, a bus bar 40, a cover member 60, a gas duct 70, and terminal members 80.

The plurality of units 10 are arranged side by side in the first direction (Y direction). Six units 10 are arranged side by side in the Y direction as the plurality of units 10 according to the present embodiment. It should be noted that the number of the plurality of units 10 is not particularly limited as long as two or more units 10 are included.

The plurality of units 10 are sandwiched between two end plates 20. The plurality of units 10 according to the present embodiment are pressed by end plates 20 and restrained between two end plates 20.

End plates 20 are provided at the both ends beside the plurality of units 10 in the Y direction. Each of end plates 20 is fixed to a base such as a pack case that accommodates battery module 1. End plate 20 is composed of, for example, aluminum or iron.

Restraint members 30 are provided on both sides beside the plurality of units 10 and end plates 20 in the X direction. When restraint members 30 are engaged with end plates 20 with compressive force in the Y direction being applied to the plurality of units 10 arranged side by side and to end plates 20 and then the compressive force is released, tensile force acts on restraint members 30 that connect two end plates 20. As a reaction thereto, restraint member 30 presses two end plates 20 in directions of bringing them closer to each other. As a result, restraint members 30 restrain the plurality of units 10 in the first direction (the Y direction).

Each of restraint members 30 includes a plate-shaped portion 300, a first flange portion 320, and second flange portions 330. Restraint member 30 is composed of iron, for example.

Plate-shaped portion 300 is a member extending in the Y direction. Plate-shaped portion 300 is provided with a plurality of openings 310. The plurality of openings 310 are provided at intervals in the Y direction. Each of openings 310 is constituted of a through hole extending through plate-shaped portion 300 in the X direction.

First flange portion 320 extends from beside the side surfaces of the plurality of units 10 so as to be located over the upper surfaces of the plurality of units 10. By providing first flange portion 320, rigidity of restraint member 30 formed to be relatively thin can be secured.

Second flange portions 330 are connected to both ends of plate-shaped portion 300 in the Y direction. Second flange portions 330 are fixed to end plates 20. Each of second flange portions 330 is fixed to end plate 20 by a known fixing method such as bolt fastening, for example. Thus, restraint members 30 connect two end plates 20 to each other.

As shown in Fig. 2, bus bar 40 is composed of an electric conductor. Bus bar 40 includes a first bus bar portion (not shown), a second bus bar portion 420, and a third bus bar portion 430.

The first bus bar portion (not shown) electrically connects a plurality of battery cells in unit 10 to each other. Second bus bar portion 420 electrically connects a battery cell disposed at one end in the Y direction to positive-side terminal member 80. Third bus bar portion 430 electrically connects a battery cell disposed at the other end in the Y direction to negative-side terminal member 80.

As shown in Fig. 1, cover member 60 protects electric connection of battery module 1. Cover member 60 is located above units 10 and covers an electric conductor such as bus bar 40. Gas duct 70 extends in the Y direction. Gas duct 70 is disposed between each of the plurality of units 10 and cover member 60 in the Z direction.

Terminal members 80 are arranged on both sides beside the plurality of units 10 arranged side by side in the Y direction. Each of terminal members 80 is provided at a position substantially overlapping with end plate 20 when viewed in the Z direction. Each of terminal members 80 connects battery module 1 to an external wiring such as a cable (not shown) disposed outside battery module 1.

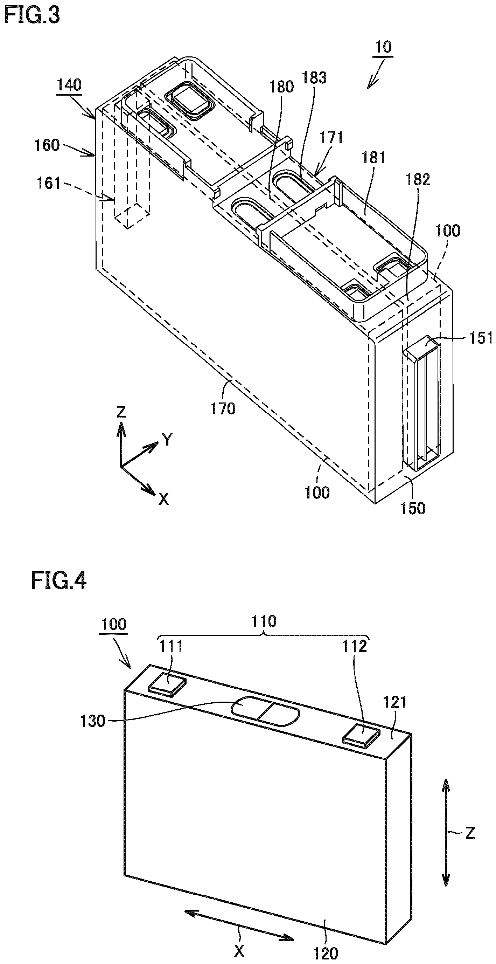

Next, a structure of each unit 10 will be described. Fig. 3 is a perspective view showing the configuration of the unit included in the battery module according to the embodiment of the present technology.

As shown in Fig. 3, each of the plurality of units 10 includes a plurality of battery cells 100 and a case 140.

Unit 10 includes two or more battery cells 100. Unit 10 according to one embodiment of the present technology includes two battery cells 100 as an even number of battery cells 100. It should be noted that the number of battery cells 100 included in each of the plurality of units 10 is not particularly limited as long as two or more battery cells 100 are included. Moreover, an odd number of battery cells 100 may be included in each of the plurality of units 10.

The plurality of battery cells 100 are arranged side by side in the first direction (Y direction). Two battery cells 100 are arranged side by side in the Y direction as the plurality of battery cells 100 according to the embodiment of the present technology. The arrangement direction of the plurality of units 10 is the same as the arrangement direction of the plurality of battery cells 100 in each of the plurality of units 10.

Case 140 has an external appearance with a rectangular parallelepiped shape. Case 140 accommodates the plurality of battery cells 100 and supports the plurality of battery cells 100 at least in the first direction (Y direction). Case 140 is composed of, for example, a resin such as polypropylene. As shown in Figs. 1 and 2, case 140 is compressed in the first direction (Y direction) by restraint members 30.

As shown in Fig. 3, case 140 has a front wall portion 150, a rear wall portion 160, a first side wall portion 170, a second side wall portion 171, and an upper surface portion 180.

Front wall portion 150 is a surface adjacent to one restraint member 30. Front wall portion 150 is provided with a first duct portion 151. First duct portion 151 protrudes from front wall portion 150 toward the one restraint member 30 side. First duct portion 151 is provided to extend through front wall portion 150 in the X direction.

Rear wall portion 160 is a surface facing front wall portion 150 with the plurality of battery cells 100 being interposed therebetween in the X direction. Rear wall portion 160 is provided with a second duct portion 161. Second duct portion 161 protrudes from rear wall portion 160 toward the other restraint member 30 side. Second duct portion 161 is provided to extend through rear wall portion 160 in the X direction. Second duct portion 161 communicates with first duct portion 151 through a cooling medium path described later.

First side wall portion 170 and second side wall portion 171 are arranged side by side in the first direction (Y direction), and face each other.

Upper surface portion 180 includes a plurality of wall portions 181, engagement surfaces 182, and a plurality of hole portions 183. The plurality of wall portions 181 are provided to extend upward in the Z direction. The plurality of wall portions 181 define an installation location of bus bar 40. First flange portion 320 of restraint member 30 is engaged with each engagement surface 182. The plurality of hole portions 183 are formed such that electrode terminals 110 and a gas-discharge valve 130, which will be described later, are exposed from upper surface portion 180.

Fig. 4 is a perspective view showing a configuration of each battery cell included in the battery module according to the embodiment of the present technology.

As shown in Fig. 4, battery cell 100 is, for example, a lithium ion battery. Battery cell 100 has a prismatic shape. Battery cell 100 has an output density of, for example, about 8000 W/L or more. Battery cell 100 has a voltage of, for example, about 1.0 V or more.

Battery cell 100 according to the present embodiment has electrode terminals 110, a housing 120, and gas-discharge valve 130.

Electrode terminals 110 are formed on housing 120. Electrode terminals 110 have a positive electrode terminal 111 and a negative electrode terminal 112 as two electrode terminals 110 arranged side by side along the second direction (X direction).

Positive electrode terminal 111 and negative electrode terminal 112 are provided to be separated from each other in the second direction (X direction). Positive electrode terminal 111 and negative electrode terminal 112 are provided on both sides beside gas duct 70 in the second direction (X direction). Positive electrode terminal 111 and negative electrode terminal 112 are joined to bus bar 40 by laser welding or the like.

Housing 120 has a rectangular parallelepiped shape, and forms the external appearance of battery cell 100. An electrode assembly (not shown) and an electrolyte solution (not shown) are accommodated in housing 120. Housing 120 has a sealing plate 121 at its upper portion. Sealing plate 121 seals the electrode assembly and the electrolyte solution in housing 120.

Gas-discharge valve 130 is provided in sealing plate 121. When internal pressure of housing 120 becomes more than or equal to a predetermined value due to gas generated inside housing 120, gas-discharge valve 130 discharges the gas to the outside of housing 120. The gas from gas-discharge valve 130 flows through gas duct 70 and is discharged to the outside of battery module 1.

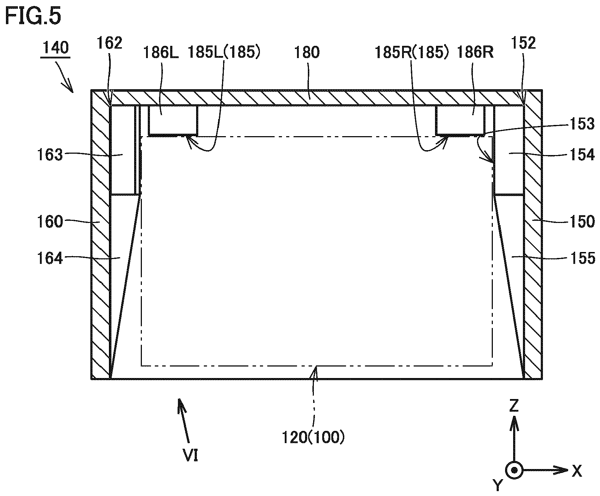

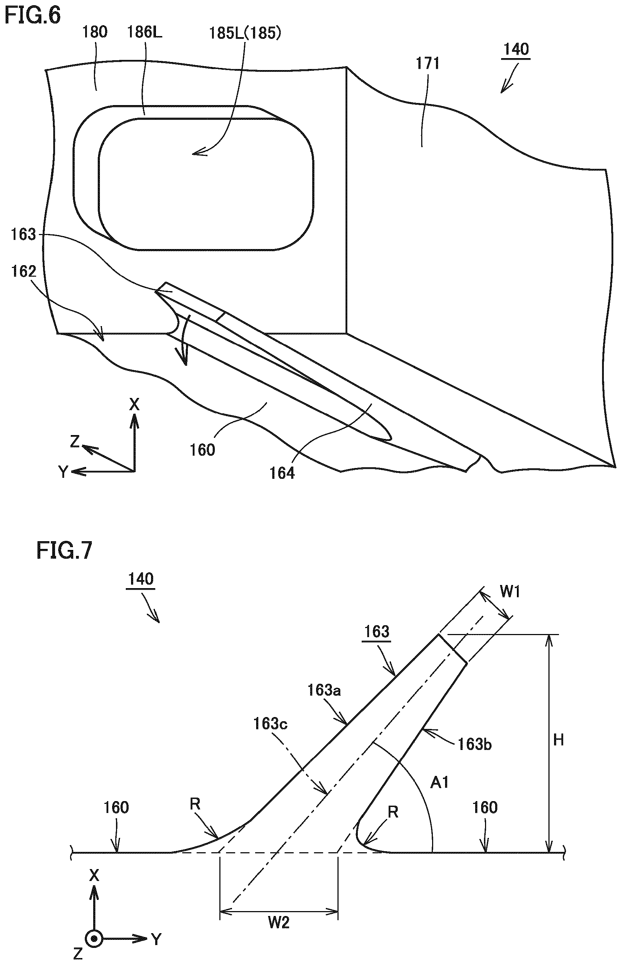

Fig. 5 is a cross sectional view showing a configuration of the case included in the battery module according to the embodiment of the present technology. Fig. 6 is a perspective view of the case of Fig. 5 when viewed in a direction of arrow VI.

As shown in Figs. 5 and 6, case 140 includes a first end portion 162 and a second end portion 152 facing each other in the second direction (X direction) orthogonal to the first direction (Y direction). First end portion 162 in the present embodiment is located on the inner surface of rear wall portion 160. Second end portion 152 in the present embodiment is located on the inner surface of front wall portion 150.

First end portion 162 is provided with a biasing portion 163 and a first tapered portion 164. Second end portion 152 is provided with a first reference surface 153 and a second tapered portion 155.

Biasing portion 163 according to the present embodiment is a rib protruding from first end portion 162 toward housing 120 of battery cell 100. The rib serving as biasing portion 163 is formed in one piece with case 140.

First tapered portion 164 extends along the third direction (Z direction). First tapered portion 164 is provided to be continuous to biasing portion 163. First tapered portion 164 is inclined to the front wall portion 150 side in a direction toward biasing portion 163.

First reference surface 153 is located at an end portion of a first extension portion 154 that is provided at second end portion 152 and that extends toward first end portion 162.

Second tapered portion 155 extends along the third direction (Z direction). Second tapered portion 155 is provided to be continuous to first reference surface 153. Second tapered portion 155 is inclined to the rear wall portion 160 side in a direction toward first reference surface 153.

Second reference surfaces 185 are provided at upper surface portion 180 of case 140. Specifically, upper surface portion 180 includes two second extension portions 186L and 186R. Each of two second extension portions 186L and 186R extends in the Z direction. One second extension portion 186L is disposed on the first end portion 162 side. The other second extension portion 186R is disposed on the second end portion 152 side. One second extension portion 186L is provided with one second reference surface 185L. The other second extension portion 186R is provided with the other second reference surface 185R.

Fig. 7 is a cross sectional view showing a configuration of the biasing portion included in the battery module according to the embodiment of the present technology.

As shown in Fig. 7, the rib serving as biasing portion 163 according to the embodiment of the present technology is inclined at an inclination angle A1 with respect to the first direction (Y direction). Inclination angle A1 of biasing portion 163 is such an angle that an intermediate line 163c obtained by continuously connecting intermediate points between a first side 163a and a second side 163b of the rib when viewed in a cross sectional view along an XY plane is inclined with respect to the first direction (Y direction).

By inclining biasing portion 163 with respect to the first direction (Y direction), biasing portion 163 can be suppressed from undergoing buckling distortion and being broken when battery cell 100 is inserted into case 140.

Inclination angle A1 of biasing portion 163 is 20° or more and 45° or less with respect to the first direction (Y direction) in a state before battery cell 100 is inserted into case 140. Inclination angle A1 of biasing portion 163 is desirably 30°. Thus, a crack can be suppressed from being generated in biasing portion 163 when biasing portion 163 is deformed.

Biasing portion 163 has a tapered shape that becomes wider toward its root. Thus, biasing portion 163 can be suppressed from being fractured at its root due to biasing portion 163 being deformed by the insertion of battery cell 100 into case 140. Further, since biasing portion 163 is connected to rear wall portion 160 at its root in the form of a curved shape R, thereby further suppressing the fracture at the root of biasing portion 163.

A width W1 of the tip of biasing portion 163 is, for example, 0.25 mm. A width W2 thereof when curved shape R at the root of biasing portion 163 is not taken into consideration is 0.42 mm, for example. A height H thereof from rear wall portion 160 to the tip of biasing portion 163 in the second direction (X direction) is, for example, 1 mm. Battery cell 100 can be pressed by biasing portion 163 in case 140 while making an area occupied by biasing portion 163 as small as possible in case 140.

Next, the following describes positioning of battery cell 100 with respect to case 140 when battery cell 100 is inserted into case 140. As shown in Figs. 5 and 6, battery cell 100 is inserted into case 140 along the third direction (Z direction).

A distance between biasing portion 163 and first reference surface 153 in the second direction (X direction) before inserting battery cell 100 is shorter than the length of battery cell 100 in the second direction (X direction). Therefore, when battery cell 100 is inserted into case 140, biasing portion 163 is deformed to the rear wall portion 160 side. In the present embodiment, the tip of biasing portion 163 is deformed in a direction of arrow in Fig. 6.

As shown in Fig. 5, as a reaction to the deformation of biasing portion 163 to the rear wall portion 160 side, biasing portion 163 presses battery cell 100 in the second direction (X direction). That is, biasing portion 163 biases battery cell 100 toward second end portion 152 of case 140. In the present embodiment, biasing portion 163 is plastically deformed when battery cell 100 is inserted into case 140.

With this deformation, biasing portion 163 presses battery cell 100 with a load of 80 N to 100 N, for example. The load of biasing portion 163 is desirably a load that does not exceed a compressive load resistance of sealing plate 121 in battery cell 100.

First reference surface 153 positions battery cell 100 in the second direction (X direction). Since battery cell 100 is biased toward first reference surface 153 by biasing portion 163 and battery cell 100 is pressed against first reference surface 153, battery cell 100 is positioned with respect to case 140 in the second direction (X direction). Since the distance between biasing portion 163 and first reference surface 153 in the second direction (X direction) before inserting battery cell 100 is shorter than the length of battery cell 100, battery cell 100 is fixed between biasing portion 163 and first reference surface 153.

Battery cell 100 inserted in case 140 is brought into abutment with second reference surface 185. Thus, battery cell 100 is positioned in the third direction (Z direction).

In battery module 1 according to the embodiment of the present technology, battery cell 100 is pressed by biasing portion 163 and battery cell 100 is pressed against first reference surface 153 provided in case 140, with the result that battery cell 100 can be positioned with respect to case 140 that forms unit 10 including the plurality of battery cells 100. As a result, when joining bus bar 40 or the like to electrode terminal 110 of battery cell 100 accommodated in case 140, positional deviation of battery cell 100 with respect to case 140 does not occur, thereby readily joining electrode terminal 110 and bus bar 40 to each other.

In battery module 1 according to the embodiment of the present technology, biasing portion 163 can be plastically deformed to securely position battery cell 100 with respect to case 140.

In battery module 1 according to the embodiment of the present technology, by inserting battery cell 100 into case 140 along the third direction (Z direction), battery cell 100 can be positioned while sandwiching battery cell 100 by case 140 in the second direction (X direction) orthogonal to the insertion direction of battery cell 100, with the result that battery cell 100 can be positioned with respect to case 140 while fixing battery cell 100 thereto.

In battery module 1 according to the embodiment of the present technology, since first tapered portion 164 and second tapered portion 155 are provided in case 140, battery cell 100 can be inserted along the tapered shapes when inserting battery cell 100 into case 140, thereby improving insertability of battery cell 100 into case 140.

In battery module 1 according to the embodiment of the present technology, battery cell 100 can be biased by such a simple configuration that biasing portion 163 is constituted of the rib, as compared with a case where a spring is used for biasing portion 163.

In battery module 1 according to the embodiment of the present technology, since the rib serving as biasing portion 163 is formed in one piece with case 140, another component for pressing battery cell 100 is not used, thereby reducing the number of components.

In battery module 1 according to the embodiment of the present technology, since the inclination angle of the rib serving as biasing portion 163 is defined to be 20° or more and 45° or less, biasing portion 163 is less likely to be broken by deformation and is facilitated to press battery cell 100.

It should be noted that biasing portion 163 is not limited to the rib and may be, for example, a plate spring or the like. Further, biasing portion 163 is formed in one piece with case 140; however, case 140 and biasing portion 163 may be provided separately. Further, biasing portion 163 is plastically deformed by the insertion of battery cell 100 into case 140, but may be only elastically deformed.

Further, in the embodiment of the present technology, each of first end portion 162 and second end portion 152 is located on the inner surface of case 140; however, it is not limited to this configuration. First end portion 162 or second end portion 152 may be located on another configuration attached to case 140. Further, battery cell 100 is biased and positioned in the second direction (X direction); however, it is not limited to this configuration and battery cell 100 may be biased in the third direction (Z direction) and positioned in the third direction (Z direction).

Although the embodiments of the present invention have been described and illustrated in detail, it is clearly understood that the same is by way of illustration and example only and is not to be taken by way of limitation, the scope of the present invention being interpreted by the terms of the appended claims. The scope of the present invention is defined by the terms of the claims, and is intended to include any modifications within the scope and meaning equivalent to the terms of the claims.

## Claims

1. A battery module comprising:
a plurality of battery cells (100) arranged side by side in a first direction, each of the plurality of battery cells (100) having a prismatic shape; and
a case (140) that accommodates the plurality of battery cells (100), that supports the plurality of battery cells (100) in at least the first direction, and that forms a unit (10) including the plurality of battery cells (100), wherein
the case (140) includes a first end portion (162) and a second end portion (152) arranged side by side and facing each other in a second direction orthogonal to the first direction,
the first end portion (162) is provided with a biasing portion (163) that is deformed, when one battery cell (100) of the plurality of battery cells (100) is inserted into the case (140), to bias the battery cell (100) toward the second end portion (152) of the case (140), and
the second end portion (152) is provided with a reference surface (153) to position the battery cell (100) in the second direction.

2. The battery module according to claim 1, wherein the biasing portion (163) is plastically deformed when the battery cell (100) is inserted into the case (140).

3. The battery module according to claim 1 or 2, wherein the battery cell (100) is inserted into the case (140) along a third direction orthogonal to the first direction and the second direction.

4. The battery module according to claim 3, wherein a tapered portion (155, 164) extending along the third direction is provided to be continuous to the biasing portion (163) or the reference surface (153).

5. The battery module according to claim 1 or 2, wherein the biasing portion (163) is a rib protruding from the first end portion (162) toward a housing (120) of the battery cell (100).

6. The battery module according to claim 5, wherein the rib is formed in one piece with the case (140).

7. The battery module according to claim 5, wherein the rib is inclined at an angle of 20° or more and 45° or less with respect to the first direction.
